# EUROPÄISCHE PATENTANMELDUNG

(11) **EP 1 914 434 A2**
(43) Veröffentlichungstag der Anmeldung: **23.04.2008**
(21) Anmeldenummer: 07018716.6
(22) Anmeldetag: 24.09.2007
(51) Int. Cl.: F16D 25/10, F16D 25/12

(54) **Drehmomentübertragungseinrichtung**

(30) Priorität: 21.10.2006 DE 102006049729
(71) Anmelder: LuK Lamellen und Kupplungsbau Beteiligungs KG, 77815 Bühl (DE)
(72) Erfinder: Metzinger, Manuel, 77815 Bühl (DE); Agner, Ivo, 77815 Bühl (DE)

(57) **Zusammenfassung**

Die Erfindung betrifft eine Drehmomentübertragungseinrichtung, insbesondere im Antriebsstrang eines Kraftfahrzeugs, mit mindestens einer nasslaufenden Kupplungseinrichtung (27,28), insbesondere einer Lamellenkupplungseinrichtung (44,45), die durch eine Betätigungshebeleinrichtung, insbesondere eine Betätigungshebelfedereinrichtung, über ein Druckstück (60) betätigbar ist.

Die Erfindung zeichnet sich dadurch aus, dass das Druckstück (60) einen Stauquerschnitt aufweist, der zu einer Druckkammer (70) hin geöffnet ist.

## Beschreibung

Die Erfindung betrifft eine Drehmomentübertragungseinrichtung, insbesondere im Antriebsstrang eines Kraftfahrzeugs, mit mindestens einer nasslaufenden Kupplungseinrichtung, insbesondere einer Lamellenkupplungseinrichtung, die durch eine Betätigungshebeleinrichtung, insbesondere eine Betätigungshebelfedereinrichtung, über ein Druckstück betätigbar ist.

Eine derartige Drehmomentübertragungseinrichtung ist zum Beispiel aus der deutschen Offenlegungsschrift DE 10 2005 027 610 A1 bekannt.

Aufgabe der Erfindung ist es, eine Drehmomentübertragungseinrichtung gemäß dem Oberbegriff des Anspruchs 1 zu schaffen, die einfach aufgebaut und kostengünstig herstellbar ist.

Die Aufgabe ist bei einer Drehmomentübertragungseinrichtung, insbesondere im Antriebsstrang eines Kraftfahrzeugs, mit mindestens einer nasslaufenden Kupplungseinrichtung, insbesondere einer Lamellenkupplungseinrichtung, die durch eine Betätigungshebeleinrichtung, insbesondere eine Betätigungshebelfedereinrichtung, über ein Druckstück betätigbar ist, dadurch gelöst, dass das Druckstück einen Stauquerschnitt aufweist, der zu einer Druckkammer hin geöffnet ist. Gemäß einem wesentlichen Aspekt der Erfindung erfüllt das Druckstück zusätzlich zu seiner Druckkraftübertragungsfunktion mindestens eine weitere Funktion, wie die Übertragung von Drehmoment oder die Reduzierung der Leckage aus der Druckkammer. Die Druckkammer wird, zum Beispiel mit Hilfe einer Kühlölpumpe, mit einem Kühlmedium versorgt, das zur Kühlung der Kupplungseinrichtung dient. Der Stauquerschnitt begrenzt einen Ringraum, in dem sich im Betrieb der sich drehenden Kupplungseinrichtung unter Fliehkraftwirkung ein Kühlmediumring anstaut. Durch den Druck des Kühlmediumrings wird eine fliehkraftbedingte Leckage aus dem Druckraum verhindert oder verringert.

Ein bevorzugtes Ausführungsbeispiel der Drehmomentübertragungseinrichtung ist dadurch gekennzeichnet, dass der Stauquerschnitt im Wesentlichen C-förmig ausgebildet ist. Der Stauquerschnitt ist vorzugsweise so ausgebildet und angeordnet, dass zwischen den freien Enden von zwei Schenkeln des C-förmigen Stauquerschnitts ein Leckagespalt mündet.

Ein weiteres bevorzugtes Ausführungsbeispiel der Drehmomentübertragungseinrichtung ist dadurch gekennzeichnet, dass der Stauquerschnitt einen Ringraum begrenzt, der über einen Leckagespalt mit dem Druckraum in Verbindung steht. In dem Ringraum staut sich im Betrieb der sich drehenden Kupplungseinrichtung unter Fliehkraftwirkung ein Kühlmediumring an.

Ein weiteres bevorzugtes Ausführungsbeispiel der Drehmomentübertragungseinrichtung ist dadurch gekennzeichnet, dass das Druckstück ringartig ausgebildet ist. Vorzugsweise ist das ringartige Druckstück zwischen der Betätigungshebeleinrichtung und einer Kupplungsscheibe, insbesondere einer Kupplungslamelle, angeordnet, insbesondere einspannbar beziehungsweise eingespannt.

Ein weiteres bevorzugtes Ausführungsbeispiel der Drehmomentübertragungseinrichtung ist dadurch gekennzeichnet, dass das Druckstück mindestens ein Drehmomentübergabeelement aufweist, das an einer Drehmomentübergabeschnittstelle zwischen dem Druckstück und einem Pumpenantriebselement, das eine Pumpe antreibt, drehfest mit dem Pumpenantriebselement verbunden ist. Vorzugsweise ist die Drehmomentübergabeschnittstelle auf einem so großen Durchmesser realisiert, dass die zugehörige Anlagekraft, das heißt die Flächenpressung, soweit reduziert ist, dass ein einziges Drehmomentübergabeelement ausreicht, um das im Betrieb auftretende Drehmoment zu übertragen.

Ein weiteres bevorzugtes Ausführungsbeispiel der Drehmomentübertragungseinrichtung ist dadurch gekennzeichnet, dass das Druckstück radial innen mindestens eine insbesondere kreisbogenförmige Ausnehmung aufweist. Die Ausnehmung schafft eine Eingriffsmöglichkeit für einen komplementär ausgebildeten Vorsprung, der an dem Pumpenantriebselement vorgesehen ist.

Ein weiteres bevorzugtes Ausführungsbeispiel der Drehmomentübertragungseinrichtung ist dadurch gekennzeichnet, dass an dem Pumpenantriebselement radial außen ein Vorsprung vorgesehen ist, der in die Ausnehmung des Druckstücks eingreift. Dadurch wird eine drehfeste Verbindung zwischen dem Pumpenantriebselement und dem Druckstück geschaffen.

Ein weiteres bevorzugtes Ausführungsbeispiel der Drehmomentübertragungseinrichtung ist dadurch gekennzeichnet, dass das Pumpenantriebselement durch eine Lagereinrichtung mit Dichtfunktion auf einem Tragelement der Kupplungseinrichtung, insbesondere einem Lamellenträger, drehbar gelagert ist. Die Lagerung des Pumpenantriebselements auf dem Tragelement ist vorzugsweise so gestaltet, dass kein Kühlöl in radialer Richtung entweichen kann.

Ein weiteres bevorzugtes Ausführungsbeispiel der Drehmomentübertragungseinrichtung ist dadurch gekennzeichnet, dass das Druckstück mindestens ein Drehmomentübergabeelement aufweist, das an einer Drehmomentübergabeschnittstelle zwischen dem Druckstück und der Kupplungseinrichtung, insbesondere einem Lamellenträger der Kupplungseinrichtung, drehfest mit der Kupplungseinrichtung, insbesondere dem Lamellenträger, verbunden ist. Dadurch wird auf einfache Art und Weise die Übertragung eines Drehmoments zum Antreiben einer Kühlölpumpe ermöglicht.

Ein weiteres bevorzugtes Ausführungsbeispiel der Drehmomentübertragungseinrichtung ist dadurch gekennzeichnet, dass das Druckstück radial außen mindestens eine Mitnehmernase aufweist. Die Mitnehmernase, die auch als Mitnehmerzahn bezeichnet wird, schafft eine formschlüssige Verbindung zwischen dem Druckstück und der Kupplungseinrichtung.

Ein weiteres bevorzugtes Ausführungsbeispiel der Drehmomentübertragungseinrichtung ist dadurch gekennzeichnet, dass an der Kupplungseinrichtung eine Ausnehmung vorgesehen ist, in welche die Mitnehmernase des Druckstücks eingreift. Vorzugsweise sind mehrere Mitnehmernasen insbesondere gleichmäßig über den Umfang des Druckstücks verteilt.

Ein weiteres bevorzugtes Ausführungsbeispiel der Drehmomentübertragungseinrichtung ist dadurch gekennzeichnet, dass das Druckstück zwischen der Betätigungshebeleinrichtung und einer Kupplungsscheibe, insbesondere einer Kupplungslamelle, angeordnet ist. Durch das Druckstück werden mehrere Kupplungsscheiben, die auch als Kupplungslamellen bezeichnet werden, zusammengedrückt, um eine reibschlüssige Verbindung zu erzeugen.

Ein weiteres bevorzugtes Ausführungsbeispiel der Drehmomentübertragungseinrichtung ist dadurch gekennzeichnet, dass das Druckstück eine Drucknase aufweist, die an der Kupplungsscheibe anliegt. Die Drucknase erstreckt sich vorzugsweise in axialer Richtung.

Ein weiteres bevorzugtes Ausführungsbeispiel der Drehmomentübertragungseinrichtung ist dadurch gekennzeichnet, dass das Druckstück, im Querschnitt betrachtet, eine Kuppe aufweist, an der die Betätigungshebeleinrichtung anliegt. Die Größe des Durchmessers, auf dem die Kuppe angeordnet ist, beeinflusst das Übersetzungsverhältnis der Betätigungshebeleinrichtung.

Die Erfindung betrifft des Weiteren ein Getriebe, insbesondere ein Doppelkupplungsgetriebe, mit mindestens einer Getriebeeingangswelle, insbesondere mit zwei Getriebeeingangswellen, und mit einer vorab beschriebenen Drehmomentübertragungseinrichtung zur Übertragung von Drehmoment zwischen einer Brennkraftmaschine und dem Getriebe.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: die Darstellung eines Halbschnitts durch einen Antriebsstrang mit einer erfindungsgemäßen Drehmomentübertragungseinrichtung;
- Figur 2: ein Druckstück der Drehmomentübertragungseinrichtung aus Figur 1 in der Draufsicht;
- Figur 3: das Druckstück aus Figur 2 im Schnitt und
- Figur 4: eine perspektivische Schnittansicht des Druckstücks aus den Figuren 2 und 3.

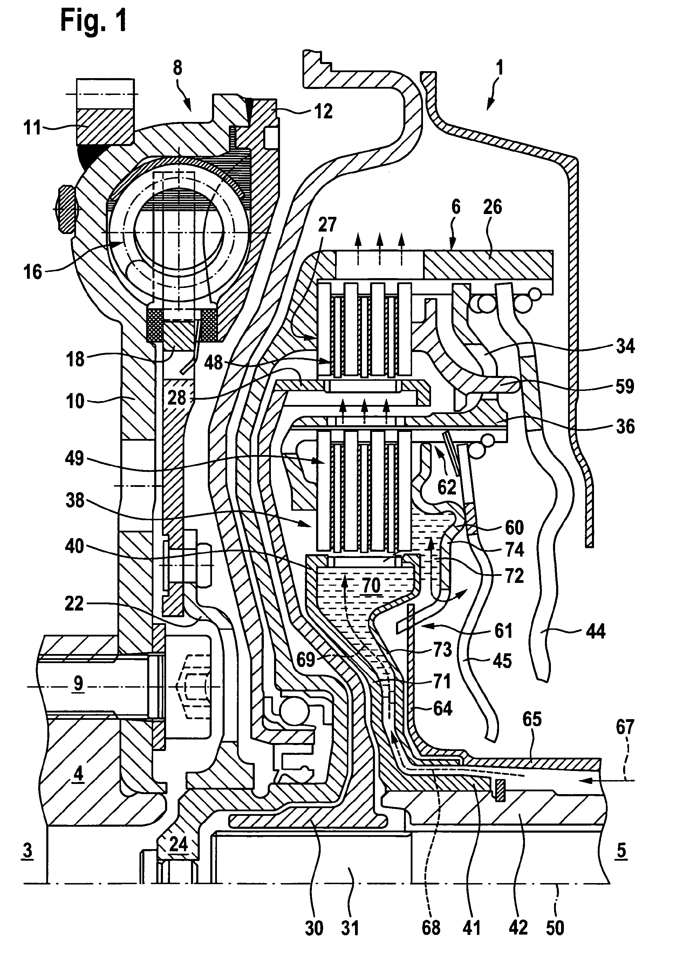

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nasslaufende Doppelkupplung 6 in Lamellenbauweise angeordnet. Zwischen die Antriebseinheit 3 und die Doppelkupplung 6 ist eine Drehschwingungsdämpfungseinrichtung 8 geschaltet. Bei der Drehschwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Drehschwingungsdämpfungseinrichtung 8 verbunden. Das Eingangsteil 10 der Drehschwingungsdämpfungseinrichtung 8 hat im Wesentlichen die Gestalt einer sich in radialer Richtung erstreckenden Kreisringscheibe, an die radial außen ein Anlasserzahnkranz 11 angeschweißt. Außerdem ist an dem Eingangsteil 10 der Drehschwingungsdämpfungseinrichtung 8 eine Schwungmasse 12 befestigt. Die Schwungmasse 12 und das Eingangsteil 10 der Drehschwingungsdämpfungseinrichtung 8 bilden einen Schwingungsdämpferkäfig, in dem mehrere Energiespeichereinrichtungen, insbesondere Federeinrichtungen 16 zumindest teilweise aufgenommen sind.

In die Federeinrichtungen 16 greift ein Ausgangsteil 18 der Drehschwingungsdämpfungseinrichtung 8 ein. Das Ausgangsteil 18 ist über ein Verbindungsteil 22 drehfest mit einem Eingangsteil 24 der Doppelkupplung 6 verbunden. Das Kupplungseingangsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist an einem Nabenteil 30 befestigt, das über eine Verzahnung drehfest mit einer ersten Getriebeeingangswelle 31 verbunden ist. Die erste Getriebeeingangswelle 31 ist als Vollwelle ausgeführt.

Das Kupplungseingangsteil 24 beziehungsweise der einstückig mit diesem verbundene Außenlamellenträger 26 der ersten Lamellen-Kupplungsanordnung 27 ist über ein Verbindungsteil 34 drehfest mit einem Außenlamellenträger 36 einer zweiten Lamellen-Kupplungsanordnung 38 verbunden. In dem gezeigten Beispiel ist das Verbindungsteil 34 einstückig mit dem Außenlamellenträger 36 verbunden. Radial innerhalb des Außenlamellenträgers 36 ist ein Innenlamellenträger 40 der zweiten Lamellen-Kupplungsanordnung 38 angeordnet, der einstückig mit einem Nabenteil 41 verbunden ist. Das Nabenteil 41 ist über eine Verzahnung drehfest mit einer zweiten Getriebeeingangswelle 42 verbunden, die als Hohlwelle ausgeführt ist. In der zweiten Getriebeeingangswelle 42 ist die erste Getriebeeingangswelle 31 drehbar angeordnet.

Die beiden Lamellen-Kupplungsanordnungen 27 und 38 werden über Betätigungshebel 44, 45 betätigt, deren radial innere Enden sich an Betätigungslagern abstützen. Die Betätigungslager werden mit Hilfe von Betätigungskolben in axialer Richtung betätigt. Die Betätigungshebel 44, 45 sind vorzugsweise einstückig mit zugehörigen Tellerfedereinrichtungen verbunden.

Jede Reibungskupplung 27, 38 verfügt über antriebsseitige und abtriebsseitige Reibeinheiten 48, 49, die mittels einer axialen Verpressung parallel zu einer Rotationsachse 50 zumindest einer der Getriebeeingangswellen 31, 42 miteinander zur Bildung eines Reibeingriffs beaufschlagbar sind. Die Reibeinheiten 48, 49 der beiden Reibungskupplungen 27, 38 sind radial übereinander angeordnet und aus einer Mehrzahl schichtweise in axialer Richtung antriebsseitig und abtriebsseitig abwechselnder Reibpartner gebildet.

Zwischen den Betätigungshebeln 44, 45 und den zugehörigen Reibeinheiten 48, 49 ist jeweils ein Druckstück 59, 60 angeordnet. Über die Druckstücke 59, 60 wird die Anpresskraft zum Betätigen der Doppelkupplung 6 von den Betätigungshebeln 44, 45 auf die zugehörigen Reibeinheiten 48, 49 übertragen. Das Druckstück 60 ist radial innen an einer Drehmomentübergabeschnittstelle 61 drehfest mit einem Kragen 64 einer Antriebshülse 65 verbunden. Radial außen ist das Druckstück 60 an einer weiteren Drehmomentübergabeschnittstelle 62 drehfest mit dem Außenlamellenträger 36 der zweiten Lamellen-Kupplungsanordnung 38 verbunden.

Die Antriebshülse 65 ist drehfest mit einem Pumpenantriebselement einer (nicht dargestellten) Pumpe verbunden, die dazu dient, einen Kühlmittelstrom zur Kühlung zumindest einer Reibungskupplung 27, 38 bereitzustellen. Bei der Pumpe handelt es sich zum Beispiel um eine Innenzahnradpumpe, insbesondere eine Gerotorpumpe, die über die Kurbelwelle 4 angetrieben wird. Durch Pfeile 67, 68, 69 ist angedeutet, dass der von der Pumpe bereitgestellte Kühlmittelstrom, insbesondere Kühlölstrom, durch einen Ringraum, der zwischen der Getriebeeingangswelle 42 und der Antriebshülse 65 ausgebildet ist, in eine Druckkammer 70 gelangt. Die Druckkammer 70 wird in axialer Richtung seitlich von einem radialen Abschnitt 71 des Innenlamellenträgers 40 und von einem Führungsring 73 begrenzt. Durch einen Leckagespalt zwischen dem Führungsring 73 und dem Innenlamellenträger 40 beziehungsweise der Reibeinheit 49 gelangt Kühlmedium aus der Druckkammer 70 in einen Ringraum 72, der von einem ringartigen Grundkörper 74 des Druckstücks 60 begrenzt wird.

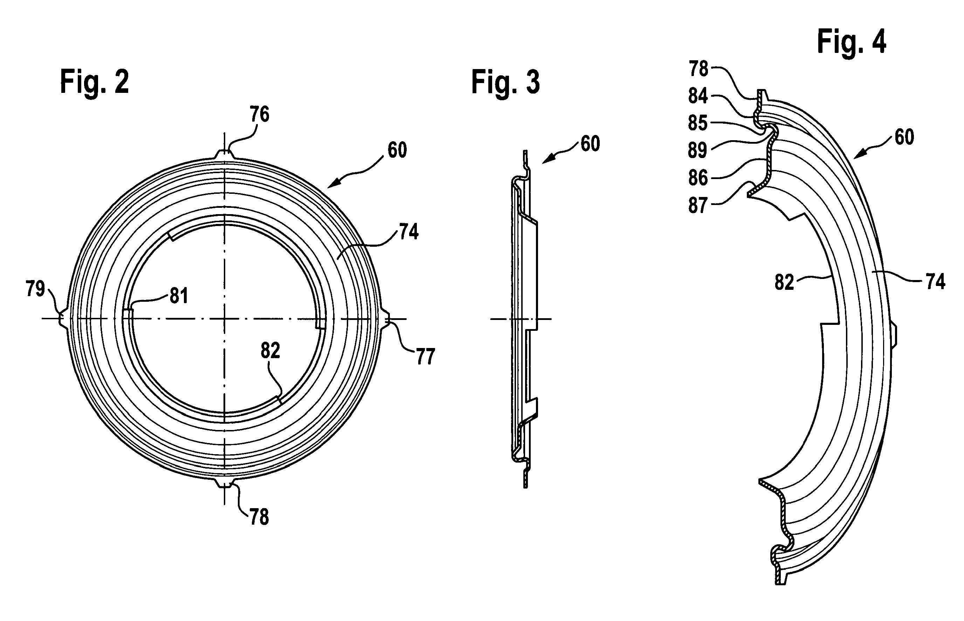

In den Figuren 2 bis 4 ist das Druckstück 60 mit dem ringartigen Grundkörper 74 in drei verschiedenen Ansichten dargestellt. Radial außen sind an dem ringartigen Grundkörper 74, der im Wesentlichen die Gestalt einer Kreisringscheibe aufweist, vier Mitnehmerzähne 76 bis 79 gleichmäßig über den äußeren Umfang verteilt. Die Mitnehmerzähne 76 bis 79, die auch als Mitnehmernasen bezeichnet werden, erstrecken sich von dem äußeren Umfang des ringartigen Grundkörpers 74 radial nach außen. Die Breite der Mitnehmerzähne 76 bis 79 nimmt nach außen hin ab. Radial innen weist der ringartige Grundkörper 74 zwei diametral angeordnete Ausnehmungen 81, 82 auf, die im Wesentlichen die Gestalt von Kreisbögen aufweisen.

In Figur 4 sieht man, dass der ringartige Grundkörper 74, im Querschnitt betrachtet, radial außen eine umlaufende Drucknase 84 aufweist. Von der Drucknase 84 geht ein Schenkel 85 eines im Wesentlichen C-förmigen Stauquerschnitts aus. Der Schenkel 85 ist einstückig mit einer Basis 86 verbunden, von der ein weiterer Schenkel 87 ausgeht. Im Übergangsbereich zwischen dem Schenkel 85 und der Basis 86 weist der ringartige Grundkörper 74 eine umlaufende Kuppe 89 auf.

Gemäß einem wesentlichen Aspekt der Erfindung wird ein Druckstück mit einer kleinen Baugröße geschaffen, in das zur Einsparung weiterer Bauteile verschiedene Funktionen integriert sind. Das Druckstück 60 ist vorzugsweise einstückig als Blechteil mit einer hohen Steifigkeit ausgeführt. Durch das erfindungsgemäße Druckstück 60 kann insbesondere ein separater Pumpenantrieb eingespart werden. Dadurch können die Kosten der nasslaufenden Doppelkupplung weiter reduziert werden. Außerdem wird durch das erfindungsgemäße Druckstück 60 der Kühlölkreislauf verbessert und das Schleppmoment vermindert. Dadurch kann Kraftstoff eingespart werden.

In dem in Figur 1 dargestellten nasslaufenden Doppelkupplungsgetriebe werden die Kupplungsscheiben oder Lamellen der Reibeinheit 49 der zweiten Lamellenkupplungsanordnung 38 zur Übertragung des anstehenden Motormoments an das Getriebe 5 durch das Druckstück 60 angepresst. Das erfindungsgemäße Druckstück 60 erfüllt darüber hinaus zwei weitere Funktionen. Zum einen kann durch den nach innen gezogenen Topf des ringartigen Grundkörpers 74, das heißt durch den von der Basis 86 mit den Schenkeln 85, 87 gebildeten Stauquerschnitt, ein Ölring in dem Ringraum 72 angestaut werden, dessen Druck eine größere Leckage in dem Fliehölspalt verhindert. Dadurch wird die Kühlfunktion der Kupplungslamellen unterstützt.

Des Weiteren wird über die Ausnehmungen 81, 82, in welche entsprechende radiale Vorsprünge des Kragens 64 eingreifen, die Antriebshülse 65 rotatorisch angetrieben. Des Weiteren greifen die Mitnehmerzähne 76 bis 79 in entsprechende Aussparungen des Außenlamellenträgers 36 ein. Somit wird über das Druckstück 60 eine drehfeste Verbindung zwischen dem Außenlamellenträger 36 und der Antriebshülse 65 geschaffen. Dadurch kann die Motordrehzahl der Kurbelwelle 4 an die Kühlölpumpe des Doppelkupplungsgetriebes weitergegeben werden, um einen konstanten Kühlölvolumenstrom aufrechtzuerhalten.

Das Druckstück 60 ist zwischen der Betätigungshebelfeder 45 und der Reibeinheit 49 angeordnet, die das Lamellenpaket umfasst, und dient vor allem dem Aufbau der Anpresskraft in der zweiten Lamellen-Kupplungsanordnung 38. Die Betätigungshebelfeder 45 liegt an der Kuppe 89 an und presst das Lamellenpaket der Reibeinheit 49 mit der Drucknase 84 zusammen. Mit dem Durchmesser zur Einspannung der Betätigungshebelfeder 45 in dem Außenlamellenträger 36, dem Durchmesser der Betätigungshebelfeder 45 an der zugehörigen Aktorik und dem Durchmesser der Kuppe 89 des Druckstücks 60 wird das Übersetzungsverhältnis des Betätigungshebels 45 für die Kupplungsanordnung 38 bestimmt.

Die Lagerung der Pumpenantriebshülse 65 auf dem Innenlamellenträger 40, zu dem der Führungsring 73 gehört, ist so gestaltet, dass das Kühlöl radial nicht ausweichen kann. Durch die Auswahl eines geeigneten Lagers, zum Beispiel eines Gleitlagers, kann eine Dichtfunktion erfüllt werden. Das Lager ist so gestaltet, dass Kühlöl in seiner Strömungsrichtung von dem Lager nicht beeinflusst wird und direkt in die Druckkammer 70 gelangt.

Das Kühlöl, das aus der Druckkammer 70 nicht direkt in die Nuten der Reiblamellen der Reibeinheit 49 gelangt, entweicht teilweise über den Leckagespalt von der Druckkammer in den Ringraum 72, der von der Basis 86 und den Schenkeln 85, 87 des ringartigen Grundkörpers 74 des Druckstücks 60 begrenzt wird. Durch die Drehbewegung der einzelnen Komponenten legt sich das Kühlmedium radial außen an den Schenkel 85 an und baut einen Fliehölring auf, der durch seinen Druck einer weiteren Leckage entgegenwirkt. Die Differenzgeschwindigkeit, die bei unbetätigter Kupplungsanordnung 38 zwischen den die Druckkammer 70 begrenzenden Teilen und dem Druckstück 60 entsteht, unterstützt die Anstauwirkung in dem Ringraum 72.

### Bezugszeichenliste

- 1: Antriebsstrang
- 3: Antriebseinheit
- 4: Kurbelwelle
- 5: Getriebe
- 6: Doppelkupplung
- 8: Drehschwingungsdämpfungseinheit
- 9: Schraubverbindung
- 10: Eingangsteil
- 11: Anlasserzahnkranz
- 12: Schwungmasse
- 16: Federeinrichtung
- 18: Ausgangsteil
- 22: Verbindungsteil
- 24: Eingangsteil (Außenlamellenträger 26)
- 26: Außenlamellenträger
- 27: erste Lamellen-Kupplungsanordnung
- 28: Innenlamellenträger
- 30: Nabenteil
- 31: Getriebeeingangswelle
- 34: Verbindungsteil (Außenlamellenträger 36)
- 36: Außenlamellenträger
- 38: zweite Lamellen-Kupplungsanordnung
- 40: Innenlamellenträger
- 41: Nabenteil
- 42: Getriebeeingangswelle
- 44: Betätigungshebel
- 45: Betätigungshebel
- 48: Reibeinheit
- 49: Reibeinheit
- 50: Rotationsachse
- 59: Druckstück
- 60: Druckstück
- 61: Drehmomentübergabeschnittstelle
- 62: Drehmomentübergabeschnittstelle
- 64: Kragen
- 65: Antriebshülse
- 67: Pfeil
- 68: Pfeil
- 69: Pfeil
- 70: Druckkammer
- 71: Abschnitt
- 72: Ringraum
- 73: Wand
- 74: ringartiger Grundkörper
- 76: Mitnehmerzahn
- 77: Mitnehmerzahn
- 78: Mitnehmerzahn
- 79: Mitnehmerzahn
- 81: Ausnehmung
- 82: Ausnehmung
- 84: Drucknase
- 85: Schenkel
- 86: Basis
- 87: Schenkel
- 89: Kuppe

## Patentansprüche

1. Drehmomentübertragungseinrichtung, insbesondere im Antriebsstrang (1) eines Kraftfahrzeugs, mit mindestens einer nasslaufenden Kupplungseinrichtung (27,38), insbesondere einer Lamellenkupplungseinrichtung, die durch eine Betätigungshebeleinrichtung (44,45), insbesondere eine Betätigungshebelfedereinrichtung, über ein Druckstück (60) betätigbar ist, **dadurch gekennzeichnet, dass** das Druckstück (60) einen Stauquerschnitt (85-87) aufweist, der zu einer Druckkammer (70) hin geöffnet ist.

2. Drehmomentübertragungseinrichtung nach Anspruch 1, **dadurch gekennzeichnet, dass** der Stauquerschnitt (85-87) im Wesentlichen C-förmig ausgebildet ist.

3. Drehmomentübertragungseinrichtung nach einem der vorhergehenden Ansprüche, **dadurch gekennzeichnet, dass** der Stauquerschnitt (85-87) einen Ringraum (72) begrenzt, der über einen Leckagespalt mit dem Druckraum (70) in Verbindung steht.

4. Drehmomentübertragungseinrichtung nach einem der vorhergehenden Ansprüche, **dadurch gekennzeichnet, dass** das Druckstück (60) ringartig ausgebildet ist.

5. Drehmomentübertragungseinrichtung nach dem Oberbegriff des Anspruchs 1, insbesondere nach einem der vorhergehenden Ansprüche, **dadurch gekennzeichnet, dass** das Druckstück (60) mindestens ein Drehmomentübergabeelement aufweist, das an einer Drehmomentübergabeschnittstelle (61) zwischen dem Druckstück (60) und einem Pumpenantriebselement (65), das eine Pumpe antreibt, drehfest mit dem Pumpenantriebselement (65) verbunden ist.

6. Drehmomentübertragungseinrichtung nach Anspruch 5, **dadurch gekennzeichnet, dass** das Druckstück (60) radial innen mindestens eine insbesondere kreisbogenförmige Ausnehmung (81,82) aufweist.

7. Drehmomentübertragungseinrichtung nach Anspruch 6, **dadurch gekennzeichnet, dass** an dem Pumpenantriebselement (65) radial außen ein Vorsprung vorgesehen ist, der in die Ausnehmung (81,82) des Druckstücks eingreift.

8. Drehmomentübertragungseinrichtung nach einem der Ansprüche 5 bis 7, **dadurch gekennzeichnet, dass** das Pumpenantriebselement (65) durch eine Lagereinrichtung mit Dichtfunktion auf einem Tragelement (40,73) der Kupplungseinrichtung, insbesondere einem Lamellenträger, drehbar gelagert ist.

9. Drehmomentübertragungseinrichtung nach dem Oberbegriff des Anspruchs 1, insbesondere nach einem der vorhergehenden Ansprüche, **dadurch gekennzeichnet, dass** das Druckstück (60) mindestens ein Drehmomentübergabeelement aufweist, das an einer Drehmomentübergabeschnittstelle (62) zwischen dem Druckstück (60) und der Kupplungseinrichtung (38), insbesondere einem Lamellenträger (36) der Kupplungseinrichtung (38), drehfest mit der Kupplungseinrichtung, insbesondere dem Lamellenträger, verbunden ist.

10. Drehmomentübertragungseinrichtung nach Anspruch 9, **dadurch gekennzeichnet, dass** das Druckstück (60) radial außen mindestens eine Mitnehmernase (76-79) aufweist.

11. Drehmomentübertragungseinrichtung nach Anspruch 10, **dadurch gekennzeichnet, dass** an der Kupplungseinrichtung eine Ausnehmung vorgesehen ist, in welche die Mitnehmernase (76-79) des Druckstücks (60) eingreift.

12. Drehmomentübertragungseinrichtung nach einem der vorhergehenden Ansprüche, **dadurch gekennzeichnet, dass** das Druckstück (60) zwischen der Betätigungshebeleinrichtung (45) und einer Kupplungsscheibe, insbesondere einer Kupplungslamelle, angeordnet ist.

13. Drehmomentübertragungseinrichtung nach Anspruch 12, **dadurch gekennzeichnet, dass** das Druckstück (60) eine Drucknase (84) aufweist, die an der Kupplungsscheibe anliegt.

14. Drehmomentübertragungseinrichtung nach einem der vorhergehenden Ansprüche, **dadurch gekennzeichnet, dass** das Druckstück (60), im Querschnitt betrachtet, eine Kuppe (89) aufweist, an der die Betätigungshebeleinrichtung (45) anliegt.

15. Getriebe, insbesondere Doppelkupplungsgetriebe, mit mindestens einer Getriebeeingangswelle (42), insbesondere mit zwei Getriebeeingangswellen, und mit einer Drehmomentübertragungseinrichtung nach einem der vorhergehenden Ansprüche zur Übertragung von Drehmoment zwischen einer Brennkraftmaschine (3) und dem Getriebe (5).
